# EUROPEAN PATENT SPECIFICATION

(11) **EP 0 661 445 B1**
(45) Date of publication and mention of the grant of the patent: **26.11.1997**
(21) Application number: 94203729.2
(22) Date of filing: 22.12.1994
(51) Int. Cl.: F02M 53/06

(54) **Injection internal combustion engine with fuel heating element and adjustable fuel directing device**
Einspritzbrennkraftmaschine mit Kraftstoffheizelement und verstellbarer Kraftstoffleitvorrichtung
Moteur à combustion interne à injection avec élément réchauffeur de carburant et dispositif de guidage de carburant ajustable

(30) Priority: 03.01.1994 NL 9400002; 06.01.1994 NL 9400015; 13.10.1994 NL 9401689; 14.11.1994 NL 9401896
(43) Date of publication of application: 05.07.1995
(73) Proprietor: von Pickartz, Rikus Zwaantinus, NL-7622 AL Borne (NL)
(72) Inventor: von Pickartz, Rikus Zwaantinus, NL-7622 AL Borne (NL)

(56) References cited:
- EP-A- 0 247 697
- EP-A- 0 456 535
- EP-A- 0 472 417
- DE-C- 496 000
- PATENT ABSTRACTS OF JAPAN vol. 17 no. 181 (M-1394) ,8 April 1993 & JP-A-04 334756 (JAPAN ELECTRON CONTROL SYST) 20 November 1992,
- PATENT ABSTRACTS OF JAPAN vol. 17 no. 12 (M-1351) ,11 January 1993 & JP-A-04 241770 (TEXAS INSTRUMENTS JAPAN) 28 August 1992,

## Description

The invention relates to an injection internal combustion engine comprising at least one cylinder with a suction line, at least one fuel injector and at least one fuel heating element. Such an internal combustion engine is known from DE-C-3426469 and NL-A-8801334 but also from EP applications 91202518.6 , 91116370.7, 91307686.5, 91106055.6, and WO 93/18295. It has found that from the total exhaustgas emission the majority is formed in the short period during which the engine has not yet reached its operating temperature. Exhaust gas catalysts, which in normal circumstances reduce the exhaust gas emission by about 90% do not reach this degree of conversion until the operating temperature of the catalyst has been reached. The conversion starts at a temperature of about 300 °C, so that after a cold start the exhaust gas emission of the engine is reduced little or not at all in a catalyst. Since the temperature level is not high enough to vaporise the fuel (petrol or alcohol), when the engine is cold an additional quantity of fuel must be added in order to obtain a combustable mixture. This leads to a high exhaust gas emission. When the engine temperature is low, both the fuel consumption and the exhaust gas emission are therefore relatively high. Heating the fuel therefore makes a considerable contribution to improving the environment and also achieves an appreciable fuel saving, for little or no additional fuel is injected.The fuel in the case of the internal combustioned engine mentioned in the preamble is brought into contact with the fuel heating element which is brought to the desired temperature in a short time, and is thereby brought to the desired temperature. The fuel will consequently vaporise better, and a better mixture with the combustion air is also achieved. The fuel heating element is switched off when the engine is warm enough to take care of the vaporation of the fuel. In the case of the engine known from the above mentioned DE-C-3426469 the fuel heating element is shaped in the form of a tube projecting into the suction line and is surrounded by an insulating tube. The heater tube and the insulating tube are provided with an edge flanges which lies in a recess of the cylinderhead and is fixed by the inlet pipe. A disadvantage of this invention is the time consuming job
required for fitting and replacement. The same disadvantage applies to the engine according to NL-A-8801334 in which the heating element is integrated in a plate which is clamped between the inlet and the head of the cylinder. A second disadvantage for the engines according to DE-C-3426469 and NL-A-8801334 is the obstacle of the projection of the heating elements for the inlet combustion air in the suction line, providing a non-optimal combustion engine. A third disadvantage for the engines according to DE-C-3426469 and NL-A-8801334 is found in the circumstances of the fuel heating element being brought into intensive contact with the combustion air, losing a major part of the heat energy which was obtained by valuable electrical energy in a very inefficient way. By equal energy supply: heating the combustion air related to heating the fuel provides only a small reduction of exhaust gas emissions. A fourth disadvantage of the engine according to DE-C-3426469 and NL-A-8801334 is found in the circumstances of the fuel heating element staying exposed to the fuel when switched off. The fuel heating element is cooling down firmly because of heat extraction by vaporation, cold spots are created where vaporation is difficult or even condensation happens, causing a non-constant combustion mixture and so an increased exhaust gas emission and an irregulation of engine management. The object of the invention is to avoid these disadvantages and to provide an engine of the type described in the preamble in which:
1e. The fuel heating element and the fuel-directing-device can be fitted and replaced easily.
2e. In the suction line no obstacles will be erected to the combustion air, so not influencing the efficiency of the engine.
3e. The efficiency of heating up fuel is considerably increased by the invention, while the fuel is brought into intensive contact with the fuel heating element by being directed by the fuel-directing-device and led to the fuel heating element, while the fuel heating element itself is arranged out of the mainstream of the combustion air, so loosing no energy to the combustion air.
4e. With this invention the possibility is achieved to arrange the fuel heating element out of the fuelstream, so avoiding condensation spots (cold spots) when the fuel heating element is switched off.

According to the invention the injection internal combustion engine mentioned in the preamble is to this end characterized in that the engine is provided downstreams of the fuel injector with a fuel-directing-device which can be brought into two positions selectively. In the first position the fuel is injected directly into the suction line without being hindered by the fuel heating element nor the fuel-directing-device, in the second position the injected fuel is directed by the fuel-directing-device and led through an channel which is formed by the fuel-directing-device and the fuel heating element. In this channel the fuel is heated to the desired temperature before it is led into the suction line.

The invention can be manufactured easily and in a cheap way in a automized production line.
Fitting and replacing can be done easily and in a short time. De fuel-directing-device is to be made of a thermal deductive material with good wear behaviour, e.g. aluminium.
In case of multy cylinder engines the fuel-directing-devices of the separate cylinders can be connected easily by manufacturing the devices in one strip which is switched by one switching device, which can be operated electrically, pneumatically (vacuum) or mechanically.
Temperature control of the fuel heating elements can be done by a PTC element in the electrical cirquit or by use of PTC heating elements. It is also possible to control temperature in a close loop control unit using electrical resistances with linear or NTC qualities.

The invention will now be explained in greater detail with reference to the figures.

Figure 1 and 2 show a cross-section of a part of an internal combustion engine according to the invention, with a fuel-directing-device provided between fuel injector and suction line. The fuel-directing-device in non-directing-position respectively fuel-directing-position.

Figure 3 and 4 show a cross-section of a part of an internal combustion engine according to the invention, here the fuel heating element is provided in close contact with the fuel-directing-device prompt downstreams of the fuel injector with the fuel- directing-device in non-directing-position respectively fuel-directing-position.

Figure 5 and 6 show a cross-section of a part of an internal combustion engine according to the invention, here the fuel heating element is formed by a number of concentric circumferences, with the fuel-directing-device in non-directing-position respectively fuel-directing-position.

Figure 7 and 8 show a cross-section of a part of an internal combustion engine according to the invention, here the fuel heating element is provided outside of the internal combustion engine, with the fuel-directing-device in non-directing-position respectively fuel-directing-position.

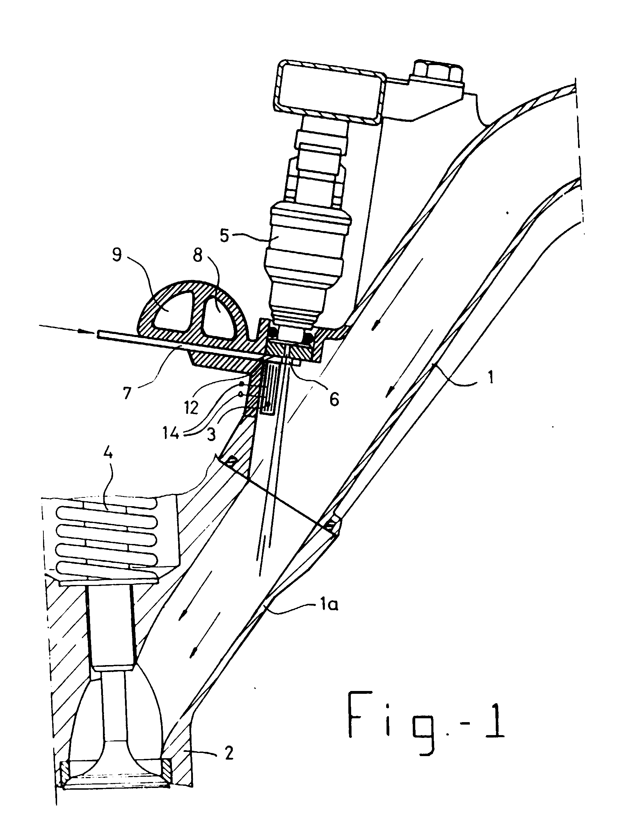

The part of an injection internal combustion engine according to the invention shown in figure 1 comprises an air inlet pipe (1), which is fixed in such a way on a cylinder head (2) that it connects to a port (1a) for supplying a fuel-air mixture through the inlet valve (4) in the cylinder. A fuel-directing-device (7) and a fuel heating element (3) with electric contacts (14) are fitted on the inlet pipe, the fuel injector (5) for furnishing the injected fuel is fitted onto the fuel-directing-device. During operation at warm engine conditions the fuel is injected directly into the suction line (1,1a), through an aperture (6) in the fuel-directing-device (7).

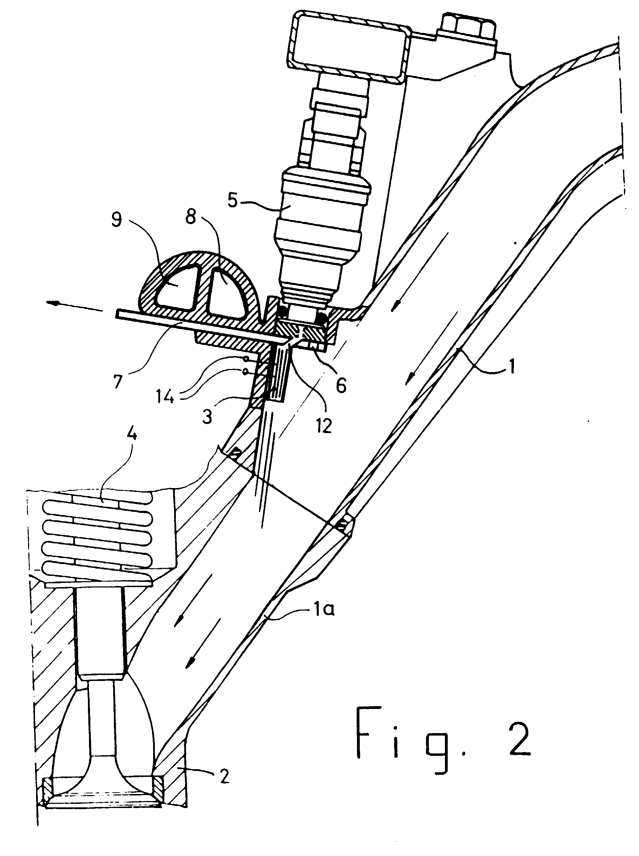

The part of an injection internal combustion engine according to the invention shown in figure 2 is the same as shown in figure 1, here the fuel-directing-device (7) is switched in the fuel-directing-position. The aperture (6) in the fuel-directing-device is not positioned in front of the fuel injector (5) any more. In stead the fuel-directing-device (7) formes a channel (12) in front of the outlet of the fuel injector (5), through this channel the fuel is led through the fuel heating element (3) and heated to the desired temperature. The fuel heating element is thermally insulated from the wall of the suction line, so heat is supplied only to the fuel. During this fase the fuel-directing-device (7) can be connected thermally to the fuel heating element (3) to maximize the surface which conducts heat to the fuel. While the fuel is brought to the desired temperature a good vaporation and a good mixture with the combustion air is possible even at cold engine conditions. In figure 2 is shown how the fuel-directing-device can be heated by a heat reservoir (8) at cold engine conditions and by the engine cooling system (9) at warm engine conditions, such to minimize condensation locations. When the engine is heated up sufficiently, the fuel-directing-device (7) is switched into the position according to figure 1 and the injected fuel is not at all hindered any more by the fuel heating element (3) nor the fuel-directing-device (7). In this position the fuel-directing-divice (7) seals the channel (12) in the fuel heating element (3), thus preventing fuel accumulation in the fuel heating element. The supply of electricity to the fuel heating element is switched off.

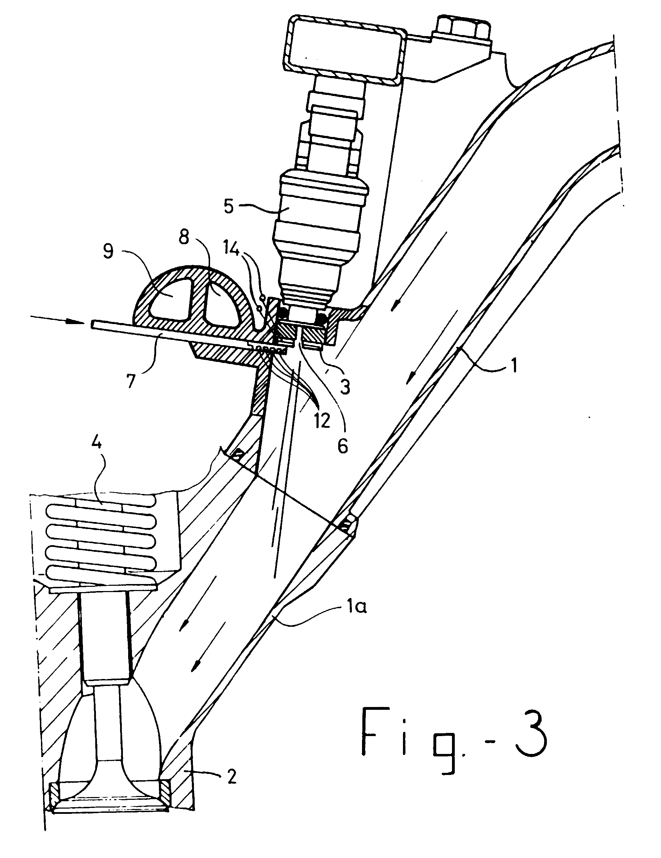

Figure 3 shows a part of an injection internal combustion engine according to the invention with the fuel heating element (3) in firm contact with de fuel-directing- device (7) prompt downstreams of the fuel injector (5) , the fuel-directing-device (7) in the non-directing-position. During operation at warm engine conditions the fuel is injected through an aperture in the electric fuel heating element (3) directly in the suction line (1,1a). The by engine heat warmed suction line (1,1a) and the cylinderhead take care of vaporation of the fuel. As figure 3 shows the fuelstream is not hindered at all by the fuel heating element (3) nor the fuel-directing-device (7).

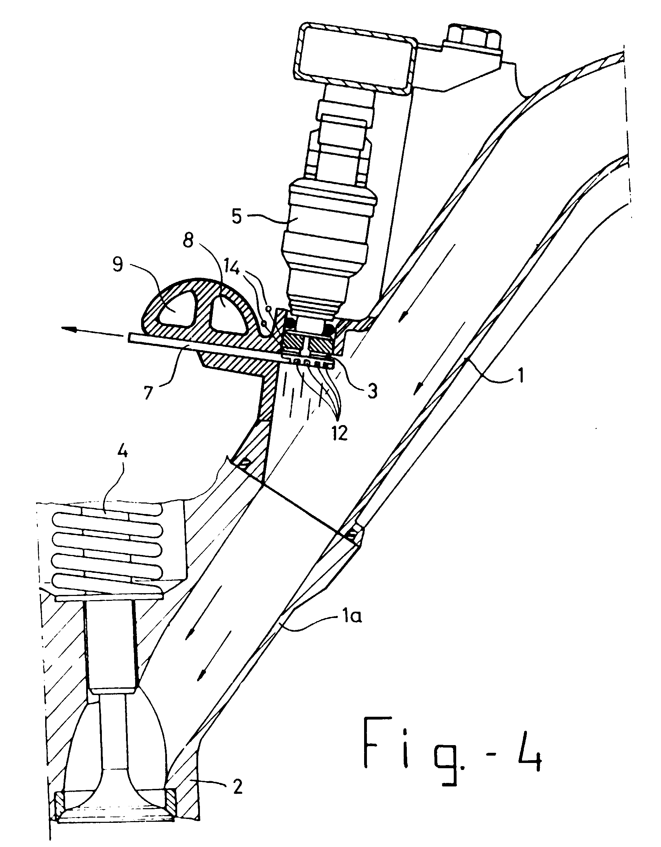

Figure 4 shows the same part of an injection internal combustion engine according to the invention as figure 3 here with the fuel-directing-device (7) switched in the fuel-directing-position. The fuel-directing-device (7) is switched in front of the aperture of the fuel heating element (3), leading the fuel between the fuel-directing-device (7) and the fuel heating element (3). Here the fuel is brought into intensive contact with the fuel heating element (3) and heated to the desired temperature. The heated fuel flows into the suction line (1,1a) via apertures in the fuel-directing-device (7). To optimize the heattransfer from fuel heating element (3) to fuel, the fuel-directing-device (7) is connected thermal to the fuel heating element so the fuel-directing-device acts as heatsink and the heat exchanging surface is increased. Figure 4 also shows how the fuel-directing-device can be heated at cold engine conditions by a heat reservoir (8) and at warm engine conditions by the engine cooling system (9). When the engine is heated up sufficiently, the fuel-directing-device (7) is switched into the position according to figure 3 and the injected fuel is not at all hindered any more by the fuel heating element (3) nor the fuel-directing-device (7), but injected directly into the suction line (1,1a). The supply of electricity to the fuel heating element (3) via the electrical contacts (14) is switched off.

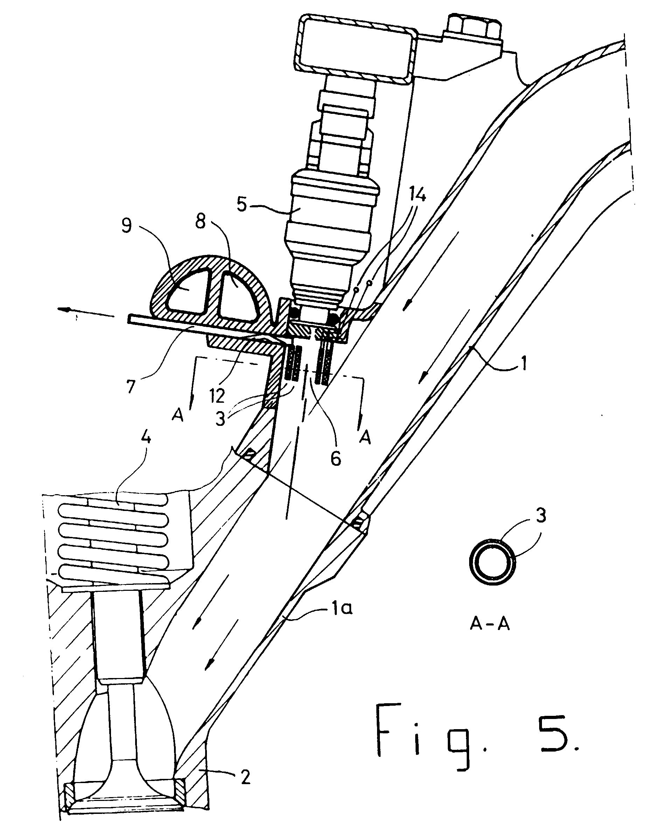

Figure 5 shows a part of an injection internal combustion engine according to the invention, here the fuel heating element (3) is formed out of several concentric circumferences, During operation at warm engine conditions the fuel is injected through the tubes (3) directly into the suction line (1,1a). The heat of the suction line (1,1a) and cylinderhead provided by the warm engine , take care of vaporation of the fuel. As figure 5 shows the fuel is not hindered at all bij the fuel heating element (3) nor the fuel-directing-device (7).

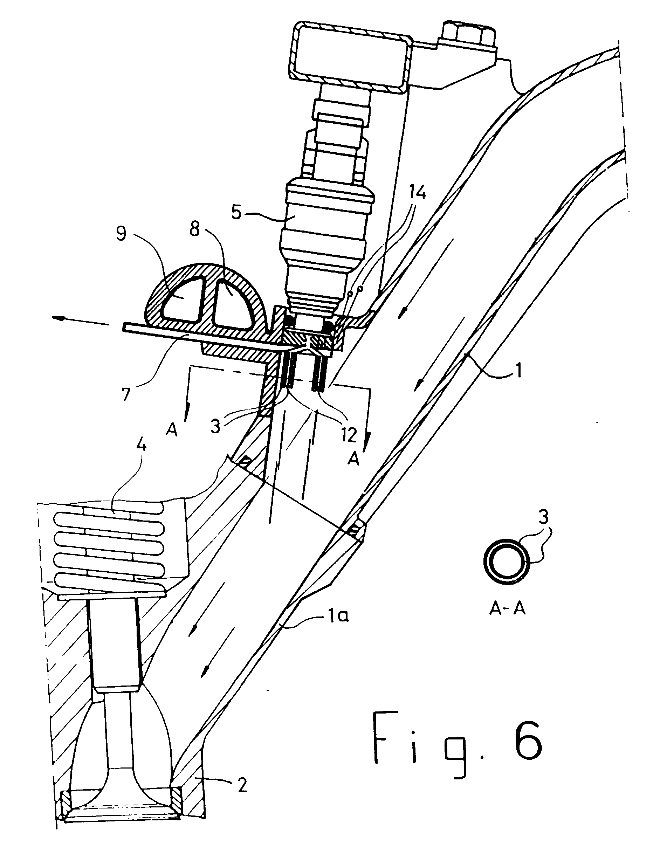

Figure 6 shows the same part of an injection internal combustion engine according to the invention as figure 5 here with the fuel-directing-device (7) switched in the fuel-directing-position. The fuel-directing-device (7) directs the fuel through a channel (12) between the tubes where the fuel is brought into intensive contact with the fuel heating element (3), thus heated to the desired temperature. The heated fuel is directed into the suction line (1,1a) were mixture with the combustion air takes place. Figure 6 also shows how the fuel-directing-device can be heated at cold engine conditions by a heat reservoir (8) and at warm engine conditions by the engine cooling system (9). When the engine is heated up sufficiently, the fuel-directing-device (7) is switched into the position according to figure 3 and the injected fuel is not at all hindered any more by the fuel heating element (3) nor the fuel-directing-device (7), but injected directly into the suction line (1,1a). The supply of electricity to the fuel heating element (3) via the electrical contacts (14) is switched off.

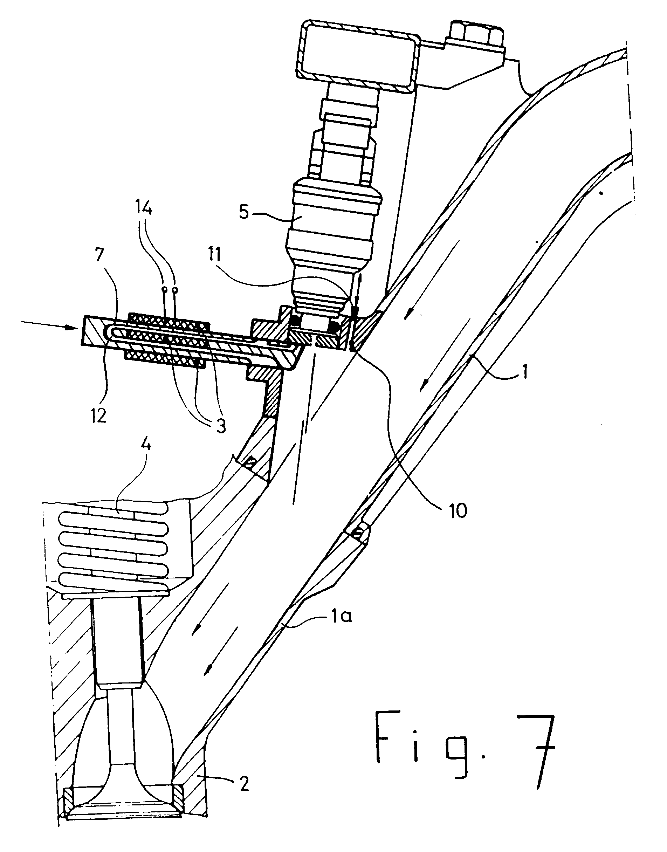

Figure 7 shows a part of an injection internal combustion engine according to the invention, here the fuel heating element (3) is positioned outside the engine , the fuel-directing-device is switched into the non-directing-position, in this position the entrance and the outlet of the channel (12) in fuel-directing-device (7) and fuel heating element (3) are closed for fuel. Fuel is injected directly into the suction line.

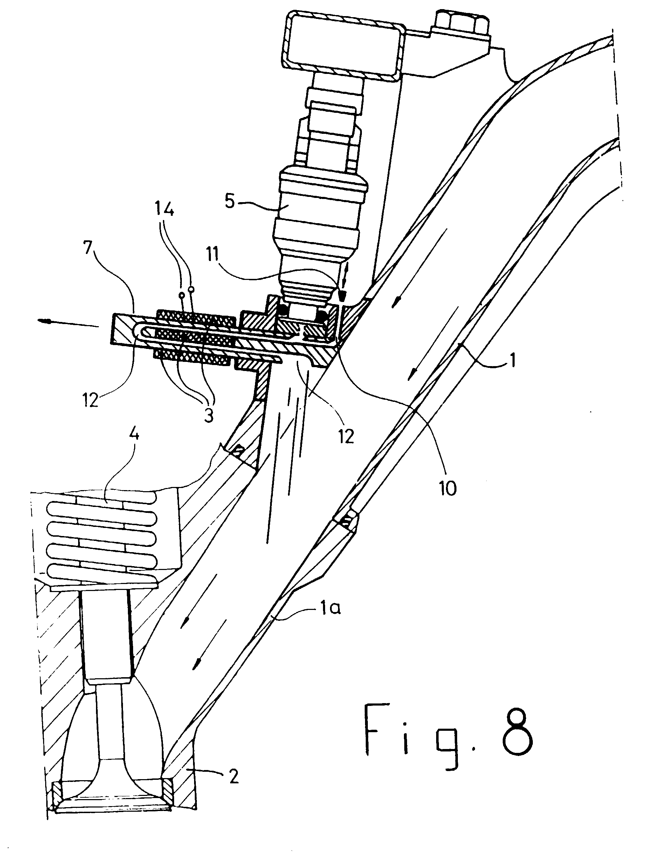

Figure 8 shows the same part of an injection internal combustion engine according to the invention as figure 7 here with the fuel-directing-device (7) switched in the fuel-directing-position. The fuel is led through the channel (12) in de fuel-directing-device (7) and the fuel heating element (3) were it is heated to the desired temperature before it is led into the suction line (1,1a). To ensure a good flow of the fuel through the channel (12) the fuel-directing-device is provided with an air inlet (10). The air entering via this airinlet forces the fuel through the channel (12). This airinlet (10) is operated by a closing device (11). Management of this closing device is arranged by the fuel-directing-device.

## Claims

1. Injection internal combustion engine comprising at least one cylinder with a suction line (1), at least one fuel injector (5), at least one fuel heating element (3) positioned outside of the fuel-beam as injected by the fuel-injector (5) and at least one fuel-directing-device (7) positioned downstreams of the fuel injector (5). The fuel-directing-device (7) can be positioned selectively into two positions. This injection internal combustion engine is characterized in that the fuel-directing-device (7) forms downstreams of the fuel injector (5) a channel (12) through which the injected fuel is led when the fuel-directing-device (7) is in the fuel-directing-position . In this channel (12) the fuel is heated to the desired temperature before the fuel is led into the suction line (1). With the fuel-directing-device (7) in the none-directing-position the fuel is injected by the fuel injector (5) directly in said suction line (1) and not hindered at all by fuel-directing-device (7) or fuel heating element (3).

2. Injection internal combustion engine according to the previous mentioned claim, characterized in that with the fuel-directing-device (7) in the none-directing-position the fuel is injected by the fuel injector (5) directly in said suction line (1) through an aperture (6) in said fuel-directing-device (7) and not hindered at all by fuel-directing-device (7) or fuel heating element (3).

3. Injection internal combustion engine according to one of previous mentioned claims, characterized in that the channel (12) created by the fuel-directing-device (7) is equiped with an air-inlet (10) positioned in a way that the air entering through this air-inlet will force the fuel present in the channel (12) into the suction line (1).

4. Injection internal combustion engine according to one of previous mentioned claims characterized in that the fuel heating element is formed by a number of concentric circumferences.

5. Injection internal combustion engine according to one of previous mentioned claims characterized in that the fuel heating element (3) is positioned outside the suction line (1).

6. Injection internal combustion engine according to one of previous mentioned claims characterized in that the fuel heating element (3) is positioned outside the internal combustion engine.

7. Injection internal combustion engine according to one of previous mentioned claims, characterized in that the air-inlet (10) in the channel (12) is sealable by a sealing device (11).

8. Injection internal combustion engine according to one of previous mentioned claims characterized in that the fuel injector (5) and the fuel-directing-device (7) are fully integrated.

9. Injection internal combustion engine according to one of previous mentioned claims characterized in that the fuel-directing-device (7) and the fuel heating element (3) are fully integrated.

10. Injection internal combustion engine according to one of previous mentioned claims, characterized in that with the fuel-directing-device (7) in the none-directing position the inlet or outlet of the channel (12) is sealed.

## Patentansprüche

1. Verbrennungsmotor des Einspritztyps mit mindestens einem Zylinder ausgestattet mit einem Luftansaugkanal (1), mindestens einer Kraftstoffeinspritzdüse (5) und mindestens einem Vorwärm-Element (3), das sich außerhalb des durch die Einspritzdüse (5) projizierten Kraftstoffstrahls befindet, und mindestens einer Vorrichtung zur Kraftstoffsteuerung (7), die stromabwärts von der Einspritzdüse (5) plaziert ist. Die Vorrichtung zur Kraftstoffsteuerung kann selektiv in zwei Positionen gebracht werden. Dieser Verbrennungsmotor wird dadurch gekennzeichnet, daß stromabwärts von der Einspritzdüse (5) die Vorrichtung zur Kraftstoffsteuerung (7) mit der Einspritzdüse (5) einen Kanal (12) bildet, durch den der eingespritzte Kraftstoff geleitet wird, wenn die Vorrichtung zur Kraftstoffsteuerung in die kraftstoffsteuernde (kraftstoff-aufnehmende) Position gebracht wird. In diesem Kanal (12) wird der Kraftstoff auf die gewünschte Temperatur erwärmt, bevor er dem Luftansaugkanal (1) zugeführt wird. Wenn sich die Vorrichtung zur Kraftstoffsteuerung (7) in nicht-kraftstoffsteuemder (kraftstoff-durchlassender) Position befindet, wird der Kraftstoff von der Einspritzdüse (5) direkt in den Luftansaugkanal (1) eingespritzt, und wird dabei absolut nicht von der Vorrichtung zur Kraftstoffsteuerung (7) oder dem Vorwärm-Element (3) behindert.

2. Verbrennungsmotor des Einspritztyps nach der oben beschriebenen Bedingung mit der kennzeichnenden Eigenschaft, daß die Einspritzdüse (5) den Kraftstoff, wenn sich die Vorrichtung zur Kraftstoffsteuerung (7) in der nicht-kraftstoffsteuernden (kraftstoff-durchlassenden) Position befindet, direkt in den Luftansaugkanal (1) einspritzt, und zwar durch eine Öffnung (6) in der Vorrichtung zur Kraftstoffsteuerung (7); der eingespritzte Kraftstoff wird dabei absolut nicht von der Vorrichtung zur Kraftstoffsteuerung (7) oder dem Vorwärm-Element (3) behindert.

3. Verbrennungsmotor des Einspritztyps nach den oben beschriebenen Bedingungen mit der kennzeichnenden Eigenschaft, daß der Kanal (12) mit einem Lufteinlaß (10) ausgestattet ist, der so angebracht ist, daß die Luft, die über diesen Lufteinlaß in den Kanal (12) gelangt, den im Kanal (12) befindlichen Kraftstoff zum Luftansaugkanal (1) leitet.

4. Verbrennungsmotor nach einer der obigen Schlußfolgerungen mit der kennzeichnenden Eigenschaft, daß das Vorwärm-Element durch eine Reihe konzentrischer Zylinder gebildet wird.

5. Verbrennungsmotor nach einer der obigen Schlußfolgerungen mit der kennzeichnenden Eigenschaft, daß sich das Vorwärm-Element außerhalb des Luftansaugkanals befindet.

6. Verbrennungsmotor nach einer der obigen Schlußfolgerungen mit der kennzeichnenden Eigenschaft, daß sich das Vorwärm-Element außerhalb des Motors befindet.

7. Verbrennungsmotor nach einer der obigen Schlußfolgerungen mit der kennzeichnenden Eigenschaft, daß der Lufteinlaß (10) im Kanal (12) mit einem Verschlußmechanismus (11) zu verschließen ist.

8. Verbrennungsmotor nach einer der obigen Schlußfolgerungen mit der kennzeichnenden Eigenschaft, daß die Kraftstoff-Einspritzdüse (5) und die Vorrichtung zur Kraftstoffsteuerung (7) vollkommen integriert sind.

9. Verbrennungsmotor nach einer der obigen Schlußfolgerungen mit der kennzeichnenden Eigenschaft, daß die Vorrichtung zur Kraftstoffsteuerung (7) und das Vorwärm-Element (3) vollkommen integriert sind.

10. Verbrennungsmotor nach einer der obigen Schlußfolgerungen mit der kennzeichnenden Eigenschaft, daß die Ansaugöffnung oder die Auslaßöffnung des Kanals (12) verschlossen wird, wenn sich die Vorrichtung zur Kraftstoffsteuerung (7) in nicht-kraftstoffsteuemder (kraftstoff-durchlassender) Position befindet.

## Revendications

1. Moteur à combustion à injection comprenant au moins un cylindre doté d'un conduit d'admission d'air (1), au moins un injecteur de carburant (5) et au moins un élément de réchauffage du carburant (3) positionné en dehors du flux de carburant injecté par l'injecteur de carburant (5) et au moins un dispositif directionnel de carburant (7) positionné en aval de l'injecteur de carburant (5). Le dispositif directionnel de carburant peut être réglé sur deux positions au choix. Ce moteur à combustion est caractérisé par le fait que, en aval de l'injecteur de carburant (5), le dispositif directionnel de carburant (7) forme avec l'injecteur de carburant (5) un canal (12) par lequel est acheminé le carburant injecté lorsque le dispositif directionnel de carburant est placé en position de directionnelle de carburant. Dans ce canal (12), le carburant est réchauffé jusqu'à la température souhaitée avant d'être acheminé vers le canal d'admission d'air (1). Avec le dispositif directionnel de carburant (7) en position non-directionnelle de carburant, le carburant est injecté directement à travers l'injecteur de carburant (5) dans le conduit d'admission d'air (1), sans être aucunement gêné par le dispositif directionnel de carburant (7) ou l'élément chauffant (3).

2. Moteur à combustion du type à injection suivant les revendications ci-dessus avec pour caractéristique qu'avec le dispositif directionnel de carburant (7) en position non-directionnelle de carburant, l'injecteur de carburant (5) injecte le carburant directement dans le conduit d'admission d'air (1) par un orifice (6) dans le dispositif directionnel de carburant (7), le carburant injecté n'étant en l'occurrence aucunement gêné par le dispositif directionnel de carburant (7) ou l'élément chauffant (3).

3. Moteur à combustion du type à injection suivant une des revendications ci-dessus, avec pour caractéristique que le canal (12) est pourvu d'une admission d'air (10) positionnée de telle sorte que l'air qui pénètre par cette admission d'air dans le canal (12) achemine le carburant qui se trouve dans le canal (12) vers le conduit d'admission d'air (1).

4. Moteur à combustion suivant une des conclusions ci-dessus avec pour caractéristique que l'élément chauffant est constitué d'un certain nombre de cylindres concentriques.

5. Moteur à combustion suivant une des conclusions précédentes, avec pour caractéristique que l'élément chauffant est positionné hors du conduit d'admission d'air.

6. Moteur à combustion suivant une des conclusions précédentes, avec pour caractéristique que l'élément chauffant est positionné hors du moteur.

7. Moteur à combustion suivant une des conclusions précédentes, avec pour caractéristique que l'admission d'air (10) dans le canal (12) peut être obturé par un mécanisme de fermeture (11).

8. Moteur à combustion suivant une des conclusions précédentes, avec pour caractéristique que l'injecteur de carburant (5) et le dispositif directionnel de carburant (7) sont complètement intégrés.

9. Moteur à combustion suivant une des conclusions précédentes, avec pour caractéristique que le dispositif directionnel de carburant (7) et l'élément chauffant (3) sont complètement intégrés.

10. Moteur à combustion suivant une des conclusions précédentes, avec pour caractéristique qu'avec le dispositif directionnel de carburant (7) en position non-directionnelle de carburant, l'entrée ou la sortie du canal est fermée.
